# EUROPEAN PATENT APPLICATION

(11) **EP 4 414 200 A2**
(43) Date of publication of application: **14.08.2024**
(21) Application number: 24154910.4
(22) Date of filing: 31.01.2024
(51) Int. Cl.: B60K 35/21

(54) **VEHICLE DISPLAY DEVICE, VEHICLE DISPLAY METHOD, AND NON-TRANSITORY STORAGE MEDIUM**

(30) Priority: 08.02.2023 JP 2023017948
(71) Applicant: TOYOTA JIDOSHA KABUSHIKI KAISHA, Toyota-shi, Aichi-ken, 471-8571 (JP)
(72) Inventor: TSUJINO, Miki, Toyota-shi 471-8571 (JP); HATANAKA, Masashi, Obu 474-0025 (JP); KONISHI, Makoto, Tokyo 103-0022 (JP)
(74) Representative: J A Kemp LLP

(57) **Abstract**

A vehicle display device (12) includes one or more processors (16A), the one or more processors configured to acquire a state of driver assistance provided by pulse and glide that repeats acceleration and coasting, and cause a display (14) to display a state image based on the acquired state of the driver assistance, the state image representing an accelerating state or a coasting state of the driver assistance and a rough indication of when each state is going to end.

## Description

### BACKGROUND OF THE INVENTION

### 1. Field of the Invention

The present invention relates to vehicle display devices, vehicle display methods, and non-transitory storage media.

### 2. Description of Related Art

Japanese Unexamined Patent Application Publication No. 2021-109582 (JP 2021-109582 A) proposes a lane change assist device including a driver assist electronic control unit (ECU). The driver assist ECU waits in a standby mode and displays a standby image (first image) on an information display when an operation duration, namely the time period during which a predetermined operation of a turn signal lever continues, becomes equal to or greater than a first duration threshold. When the operation duration becomes equal to or greater than a second duration threshold, the driver assist ECU starts lane change assistance control, switches an image from the first image to a second image indicating that the lane change assistance control is being performed, and displays the second image on the information display.

### SUMMARY OF THE INVENTION

The technique disclosed in JP 2021-109582 A allows an occupant to recognize that the driver assistance is being performed but does not allow the occupant to recognize the state of the driver assistance being performed. This technique therefore has room for improvement.

The present invention provides a vehicle display device, a vehicle display method, and a non-transitory storage medium that allow an occupant to recognize not only whether driver assistance is being performed but also the state of the driver assistance.

A vehicle display device according to a first aspect includes one or more processors. The one or more processors are configured to: acquire a state of driver assistance provided by pulse and glide that repeats acceleration and coasting, and cause a display to display a state image based on the acquired state of the driver assistance, the state image representing an accelerating state or a coasting state of the driver assistance and a rough indication of when each state is going to end.

According to the first aspect, the state image representing the accelerating state or the coasting state of the driver assistance and the rough indication of when each state is going to end is displayed. This allows an occupant to know how much the vehicle will accelerate and how much the vehicle will coast by checking the state image. The occupant can therefore recognize not only whether the driver assistance is being performed but also the state of the driver assistance.

In the vehicle display device according to the above aspect, the one or more processors may be configured to cause the display to display a vehicle image representing a vehicle and line images in front of and behind the vehicle image, and to cause the display to display the rough indication by changing a relative position of the vehicle image between the line images.

According to the above aspect, the occupant can recognize how much the accelerating state or the coasting state will continue from the relative positional relationship of the vehicle image between the line images.

In the vehicle display device according to the above aspect, the one or more processors may be configured to cause the display to highlight the line image in front of the vehicle image when in the accelerating state, and to cause the display to highlight the line image behind the vehicle image when in the coasting state.

According to the above aspect, since the line image is highlighted, it becomes easier to know whether the state of the driver assistance is the accelerating state or the coasting state.

In the vehicle display device according to the above aspect, the one or more processors may be configured to cause the display to display a gauge image as the state image, the gauge image representing the accelerating state or the coasting state.

According to the above aspect, the occupant can recognize how much the accelerating state or the coasting state will continue from the gauge image.

In the vehicle display device according to the above aspect, the one or more processors may be configured to cause the display to display an arrow image according to the accelerating state or the coasting state as the state image.

According to the above aspect, the occupant can recognize from the arrow image whether the state of the driver assistance is the accelerating state or the coasting state.

In the vehicle display device according to the above aspect, the one or more processors may be configured to cause the display to display a vehicle image representing a vehicle, and to display an animation image as the state image on the display, the animation image being an image that moves along a side of the vehicle image according to the accelerating state or the coasting state.

According to the above aspect, the occupant can recognize from the animation image whether the state of the driver assistance is the accelerating state or the coasting state.

A vehicle display control method according to a second aspect includes: acquiring a state of driver assistance provided by pulse and glide that repeats acceleration and coasting; and displaying a state image based on the acquired state of the driver assistance, the state image representing an accelerating state or a coasting state of the driver assistance and a rough indication of when each state is going to end.

According to the second aspect, it is possible to provide the vehicle display method that allows an occupant to recognize not only whether the driver assistance is being performed but also the state of the driver assistance.

A non-transitory storage medium according to a third aspect is a non-transitory storage medium storing instructions that are executable by one or more processors and that cause the one or more processors to perform functions. The functions include: acquiring a state of driver assistance provided by pulse and glide that repeats acceleration and coasting; and displaying a state image based on the acquired state of the driver assistance, the state image representing an accelerating state or a coasting state of the driver assistance and a rough indication of when each state is going to end.

According to the third aspect, it is possible to provide the non-transitory storage medium that allows an occupant to recognize not only whether the driver assistance is being performed but also the state of the driver assistance.

As described above, according to the present invention, it is possible to provide the vehicle display device, the vehicle display method, and the non-transitory storage medium that allow an occupant to recognize not only whether the driver assistance is being performed but also the state of the driver assistance.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 schematically shows a vehicle display device according to an embodiment;
FIG. 2 is a block diagram showing the configuration of a control system of the vehicle display device according to the embodiment;
FIG. 3 is a block diagram showing the configuration of a main part of an electrical system of a meter electronic control unit (ECU) and an advanced driver assist ECU in the vehicle display device according to the embodiment;
FIG. 4 is a functional block diagram showing the functional configurations of the meter ECU;
FIG. 5A illustrates an example of display control on a display and a state image when in a coasting state;
FIG. 5B illustrates an example of the state image when in an accelerating state;
FIG. 6 is a flowchart showing an example of the flow of a process that is performed by the meter ECU of the vehicle display device according to the embodiment;
FIG. 7A shows an example of displaying a gauge image when in the coasting state as another example of the state image;
FIG. 7B shows an example of displaying the gauge image when in the accelerating state as another example of the state image;
FIG. 8A shows an example of displaying a vehicle image, line images, and an arrow image when in the coasting state as still another example of the state image;
FIG. 8B shows an example of displaying the vehicle image, the line images, and the arrow image when in the accelerating state as still another example of the state image;
FIG. 9A shows an example of displaying the vehicle image, the line images, and animation images when in the coasting state as yet another example of the state image; and
FIG. 9B shows an example of displaying the vehicle image, the line images, and the animation images when in the accelerating state as yet another example of the state image.

### DETAILED DESCRIPTION OF EMBODIMENTS

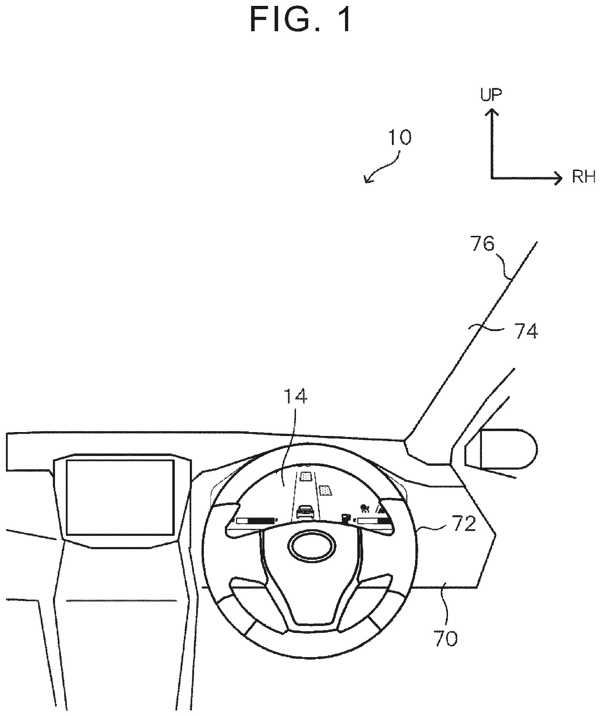

Hereinafter, an example of an embodiment of the present invention will be described in detail with reference to the drawings. FIG. 1 schematically shows a vehicle display device according to the present embodiment. In FIG. 1, the arrow UP indicates the upper side in the vehicle vertical direction, and the arrow RH indicates the right side in the vehicle lateral direction. The up-down direction and the left-right direction in the following description mean the upper and lower sides in the vehicle vertical direction and the left and right sides in the vehicle lateral direction.

As shown in FIG. 1, an instrument panel 70 is installed in the front part of a vehicle cabin of a vehicle 10. A windshield glass 74 is installed at the front end of the instrument panel 70. The windshield glass 74 extends in the vehicle vertical direction and the vehicle lateral direction and separates the inside and outside of the vehicle cabin.

The right end in the vehicle lateral direction of the windshield glass 74 is fixed to a right front pillar 76 of the vehicle 10. The front pillar 76 extends in the vehicle vertical direction, and the windshield glass 74 is fixed to the inner end in the vehicle lateral direction of the front pillar 76. The left end in the vehicle lateral direction of the windshield glass 74 is fixed to a left front pillar, not shown, of the vehicle 10.

The instrument panel 70 extends in the vehicle lateral direction, and a steering wheel 72 is installed on the right side in the vehicle lateral direction of the instrument panel 70. That is, according to the present embodiment, as an example, the vehicle is a righthand drive vehicle with the steering wheel 72 on the right side, and a driver's seat is on the right side of the vehicle 10.

A display 14 of the vehicle display device is installed on the instrument panel 70 at a position in front of the steering wheel 72. As an example, the display 14 is a liquid crystal panel, and is configured to display the traveling state of the vehicle 10, the operating state of a driver assist device etc.

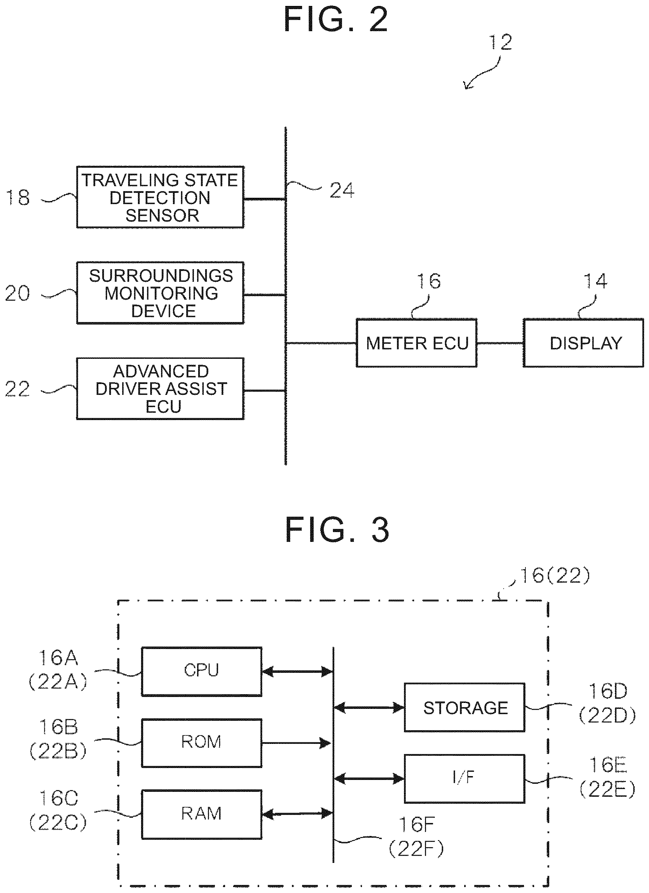

Next, the configuration of a control system of the vehicle display device 12 according to the present embodiment will be described. FIG. 2 is a block diagram showing the configuration of the control system of the vehicle display device 12 according to the present embodiment.

The vehicle display device 12 according to the present embodiment includes a meter electronic control unit (ECU) 16, a traveling state detection sensor 18, a surroundings monitoring device 20, and an advanced driver assist ECU 22. These components are connected to a vehicle network 24.

The display 14 is connected to the meter ECU 16. The meter ECU 16 controls the display 14 to perform a process of displaying a plurality of meters, a process of displaying various types of vehicle information, etc. When an abnormality etc. occurs in the vehicle 10, the meter ECU 16 notifies an occupant by displaying the occurrence of the abnormality on the display 14. Examples of the various types of vehicle information to be displayed on the display 14 include the operating state of the driver assist device etc. The display mode of the display 14 can be switched using a switch, not shown, etc., and can be changed to a display mode that matches the driver's preference.

The traveling state detection sensor 18 detects the traveling state of the vehicle 10. The traveling state detection sensor 18 includes, for example, at least one of various sensors such as a vehicle speed sensor, an acceleration sensor, a gyro sensor, an accelerator operation amount sensor, and a brake sensor.

The surroundings monitoring device 20 detects information indicating the surroundings of the vehicle 10. For example, the surroundings monitoring device 20 includes at least one of various devices such as a Global Positioning System (GPS) device, an invehicle communication device, a navigation system, a radar device, and a camera.

The advanced driver assist ECU 22 has functions to acquire surroundings information detected by the surroundings monitoring device 20 that monitors the surroundings, provide the surroundings information to other ECUs, and control steering and brakes as necessary. For example, the advanced driver assist ECU 22 performs a process of controlling the brakes to assist in deceleration when accelerator-off is detected by the traveling state detection sensor 18 and another vehicle, an intersection, etc. is detected ahead of the vehicle by the surroundings monitoring device 20. Specifically, the advanced driver assist ECU 22 control functions such as a cruise control function to control acceleration and deceleration so that the vehicle follows the preceding vehicle while responding to changes in vehicle speed of the preceding vehicle and a lane tracing assist function to warn of the possibility of deviation from the lane or course and assist in part of the steering wheel operation to avoid deviation from the lane or course. In the present embodiment, there are two types of cruise control functions: normal cruise control that maintains a set speed, and eco-drive cruise control that performs pulse and glide for a preset speed to reduce fuel consumption. The pulse and glide is a driving method in which acceleration and coasting are repeated in order to reduce fuel consumption during traveling. In the eco-drive cruise control, the pulse and glide is performed so that the speed is within a predetermined allowable range up to a preset speed as an upper limit.

FIG. 3 is a block diagram showing the configuration of a main part of an electrical system of the meter ECU 16 and the advanced driver assist ECU 22 in the vehicle display device 12 according to the present embodiment. Since the meter ECU 16 and the advanced driver assist ECU 22 basically have the configuration of a common computer, the meter ECU 16 will be representatively described.

The meter ECU 16 is a common microcomputer including a central processing unit (CPU) 16A, a read-only memory (ROM) 16B, a random access memory (RAM) 16C, a storage 16D, an interface (I/F) 16E, and a bus 16F.

The CPU 16A is a central processing unit and controls the overall operation of the device by executing various programs. The number of CPUs is not limited to one. The ROM 16B stores in advance various control programs such as a vehicle display program, various parameters, etc. The RAM 16C is used as a work area etc. when the CPU 16A executes the various programs. The storage 16D is composed of various storage units such as a hard disk drive (HDD), a solid state drive (SSD), and a flash memory, and stores various types of data, application programs, etc. The I/F 16E can be connected to the vehicle network 24, and sends and receives various types of data to and from other ECUs connected to the vehicle network 24 such as the meter ECU 16. The above components of the meter ECU 16 are electrically connected to each other via the bus 16F. In the present embodiment, the vehicle display program is described as being stored in the ROM 16B. However, the vehicle display program may be stored in the storage 16D.

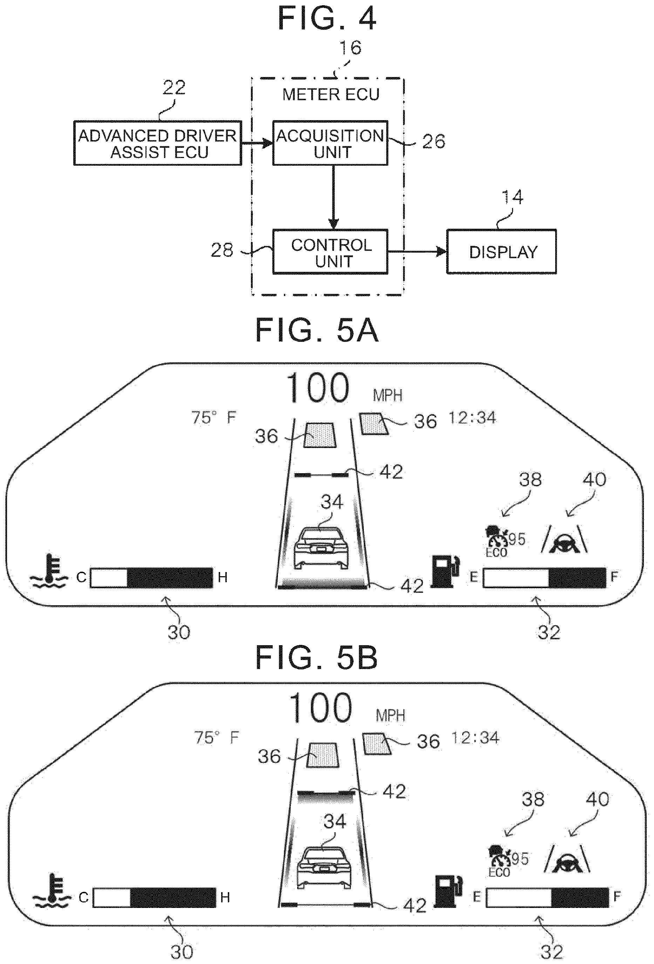

Next, the functional configurations that function as the CPU 16A of the meter ECU 16 executes the programs stored in the ROM 16B will be described. FIG. 4 is a functional block diagram showing the functional configurations of the meter ECU 16.

As shown in FIG. 4, the meter ECU 16 has the functions of an acquisition unit 26 and a control unit 28 as the CPU 16A executes the programs stored in the ROM 16B.

The acquisition unit 26 is configured to acquire the state of driver assistance of the pulse and glide from the advanced driver assist ECU 22 when instructed to perform the eco-driving cruise control.

Based on the acquisition result of the acquisition unit 26, the control unit 28 displays a state image representing an accelerating state or coasting state of the driver assistance and a rough indication of when each state is going to end. That is, the control unit 28 displays, on the display 14, a state image representing an accelerating state or coasting state of the driver assistance and a rough indication of when each state is going to end, based on the state of the driver assistance of the pulse and glide acquired by the acquisition unit 26.

Next, display control on the display 14 that is performed by the CPU 16A of the meter ECU 16 executing the programs stored in the ROM 16B will be described.

The meter ECU 16 performs control to display the detection results from the traveling state detection sensor 18, the detection results from the surroundings monitoring device 20, etc. on the display 14. The meter ECU 16 also performs control to display the state of assistance from the advanced driver assist ECU 22.

For example, as shown in FIG. 5A, an image showing the air temperature, vehicle speed, coolant temperature, remaining fuel level, etc. is displayed on the display 14 as an example of the detection results from the traveling state detection sensor 18, and information representing other vehicles around the vehicle 10 etc. is displayed on the display 14 as the detection results from the surroundings monitoring device 20. An image representing the driver assistance function in operation etc. is also displayed. In the example of FIG. 5A, the air temperature ("75°F" in FIG. 5A) and the vehicle speed ("100 MPH" in FIG. 5A) are displayed numerically. The coolant temperature and the remaining fuel level are displayed by a coolant temperature gauge image 30 representing the coolant temperature and a fuel gauge image 32 representing the remaining fuel level, respectively. Other vehicle images 36 indicating the presence of vehicles in front and to the side of the vehicle 10 are displayed together with a vehicle image 34 representing the vehicle 10. An icon 38 indicating that the eco-drive cruise control function is in operation and an icon 40 indicating that the lane tracing assist function is in operation are also displayed.

In the vehicle 10 equipped with the vehicle display device 12 according to the present embodiment, the state of the driver assistance of the pulse and glide may not be known when the advanced driver assist ECU 22 is executing the eco-drive cruise control function.

Therefore, in the vehicle display device 12 according to the present embodiment, the advanced driver assist ECU 22 performs control to display a state image representing an accelerating state or coasting state caused by the advanced driver assist ECU 22 during execution of the eco-drive cruise control function and a rough indication of when each state is going to end.

For example, as shown in FIGS. 5A and 5B, the vehicle image 34 and line images 42 in front of and behind the vehicle image 34 are displayed as the state image during the pulse and glide of the eco-drive cruise control. As shown in FIG. 5A, when in the coasting state of the pulse and glide, the line image 42 behind the vehicle image 34 is highlighted (e.g., displayed by a thick line or in gradation), and the relative position of the vehicle image 34 and the line images 42 is changed to display a rough indication of when the coasting state is going to end. For example, the line images 42 and the vehicle image 34 are displayed in such a manner that the distance between the line image 42 behind the vehicle image 34 and the vehicle image 34 decreases as the vehicle speed gets closer to a predetermined allowable speed as a result of the coasting. As shown in FIG. 5B, when in the accelerating state of the pulse and glide, the line image 42 in front of the vehicle image 34 is highlighted (e.g., displayed by a thick line or in gradation), and the relative position of the vehicle image 34 and the line images 42 is changed to display a rough indication of when the accelerating state is going to end. For example, the line images 42 and the vehicle image 34 are displayed in such a manner that the distance between the line image 42 in front of the vehicle image 34 and the vehicle image 34 decreases as the vehicle speed gets closer to a predetermined set speed as a result of the acceleration.

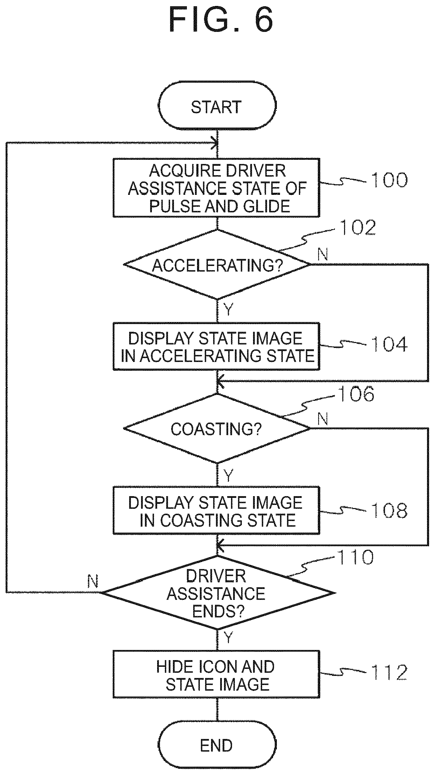

Next, a specific process that is performed by the meter ECU 16 of the vehicle display device 12 according to the present embodiment configured as described above will be described. FIG. 6 is a flowchart showing an example of the flow of a process that is performed by the meter ECU 16 of the vehicle display device 12 according to the present embodiment. For example, the process of FIG. 6 is started when the advanced driver assist ECU 22 is instructed to start the eco-drive cruise control function.

In step 100, the CPU 16A acquires the driver assistance state of the pulse and glide, and the process proceeds to step 102. Specifically, the acquisition unit 26 acquires the state of the driver assistance of the pulse and glide of the eco-drive cruise control from the advanced driver assist ECU 22.

In step 102, the CPU 16A determines whether the vehicle 10 is accelerating. This determination determines whether the state of the driver assistance of the pulse and glide is the accelerating state. When Yes in step 102, the process proceeds to step 104. When No in step 102, the process proceeds to step 106.

In step 104, the CPU 16A displays a state image when in the accelerating state on the display 14, and the process proceeds to step 106. For example, as shown in FIG. 5B, the vehicle image 34 and the line images 42 in front of and behind the vehicle image 34 are displayed as the state image. The line image 42 in front of the vehicle image 34 is highlighted (e.g., displayed by a thick line or in gradation), and the relative position of the vehicle image 34 between the line images 42 is changed to display a rough indication of when the accelerating state is going to end. For example, the line images 42 and the vehicle image 34 are displayed in such a manner that the distance between the line image 42 in front of the vehicle image 34 and the vehicle image 34 decreases as the vehicle speed gets closer to a predetermined set speed as a result of the acceleration. This allows the occupant to recognize that the state of the driver assistance is the accelerating state of the eco-drive cruise control. At this time, the occupant can also roughly recognize when the accelerating state is going to end from the change in relative position of the vehicle image 34 between the line images 42.

In step 106, the CPU 16A determines whether the vehicle 10 is coasting. This determination determines whether the state of the driver assistance of the pulse and glide is the coasting state. When Yes in step 106, the process proceeds to step 108. When No in step 106, the process proceeds to step 110.

In step 108, the CPU 16A displays a state image when in the coasting state on the display 14, and the process proceeds to step 110. For example, as shown in FIG. 5A, the vehicle image 34 and the line images 42 in front of and behind the vehicle image 34 are displayed as the state image. The line image 42 behind the vehicle image 34 is highlighted (e.g., displayed by a thick line or in gradation), and the relative position of the vehicle image 34 between the line images 42 is changed to display a rough indication of when the coasting state is going to end. For example, the line images 42 and the vehicle image 34 are displayed in such a manner that the distance between the line image 42 behind the vehicle image 34 and the vehicle image 34 decreases as the vehicle speed gets closer to a predetermined allowable speed as a result of the coasting. This allows the occupant to recognize that the state of the driver assistance is the coasting state of the eco-drive cruise control. At this time, the occupant can also roughly recognize when the coasting state is going to end from the change in relative position of the vehicle image 34 between the line images 42.

In step 110, the CPU 16A determines whether the driver assistance ends. For example, this determination determines whether an instruction to end the eco-drive cruise control function has been given. When No in step 110, the process returns to step 100 to repeat the above steps. When Yes in step 110, the process proceeds to step 112.

In step 112, the CPU 16A hides the icon 38 and the state image and ends the series of steps.

As described above, the vehicle display device 12 according to the present embodiment displays a state image representing the accelerating state or coasting state caused by the advanced driver assist ECU 22 during execution of the eco-drive cruise control function and a rough indication of when each state is going to end. This allows the occupant to know how much the vehicle will accelerate and how much the vehicle will coast. The occupant can therefore recognize not only whether the driver assistance is being performed but also the state of the driver assistance.

In the above embodiment, the line images 42 are displayed as a state image, the line image 42 behind the vehicle image 34 is highlighted when in the coasting state, and the line image 42 in front of the vehicle image 34 is highlighted when in the accelerating state. However, the present invention is not limited to this. For example, the line images 42 may not be highlighted, and the accelerating state and the coasting state may be indicated and a rough indication of when each state is going to end may be displayed only by the change in relative position of the vehicle image 34 between the line images 42.

Next, another example of the state image representing the accelerating state or coasting state of the pulse and glide and a rough indication of when each state is going to end will be described.

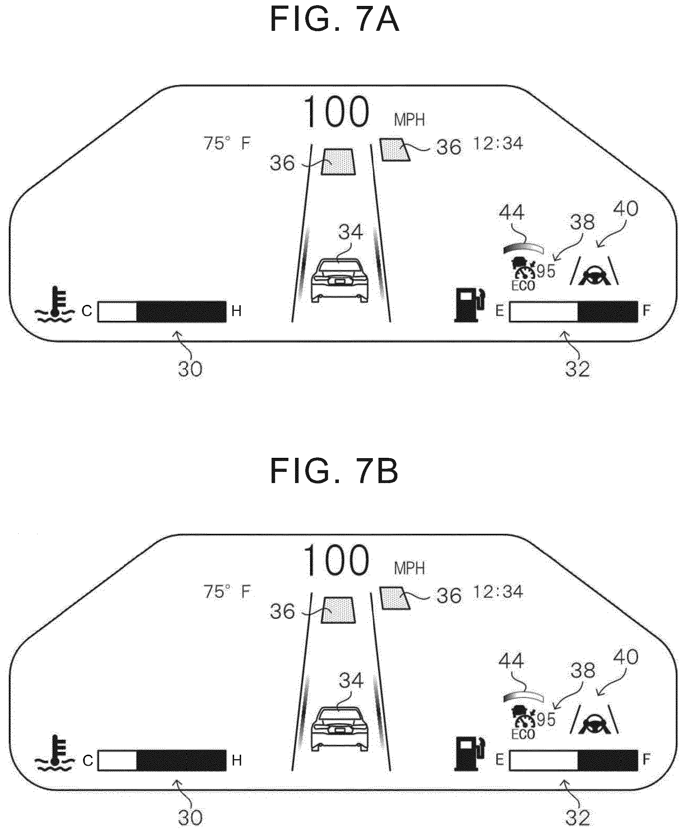

For example, as shown in FIGS. 7A and 7B, a gauge image 44 representing the accelerating state or the coasting state may be displayed as a state image. FIGS. 7A and 7B show an example of displaying a gauge image as another example of the state image.

The right side of the gauge image 44 in FIGS. 7A and 7B indicates the end of coasting. As shown in FIG. 7A, the gauge image 44 is displayed in such a manner that a gauge moves to the right as the vehicle speed gets closer to a predetermined allowable speed as a result of the coasting. From the gauge image 44, the occupant can recognize the coasting state and can also roughly recognize when the coasting state is going to end. The left side of the gauge image 44 indicates the end of acceleration. As shown in FIG. 7B, the gauge image 44 is displayed in such a manner that the gauge moves to the left as the vehicle speed gets closer to a predetermined set speed as a result of the acceleration. It is therefore possible to recognize whether the state of the driver assistance is the accelerating state or the coasting state and to roughly recognize when each state is going to end.

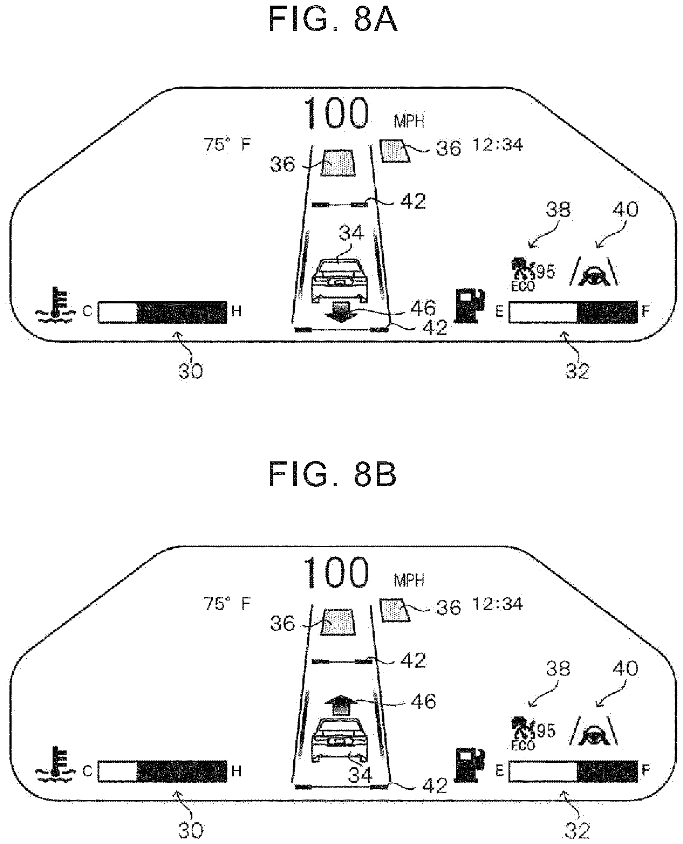

Alternatively, as shown in FIGS. 8A and 8B, the vehicle image 34, the line images 42, and an arrow image 46 may be displayed as a state image. As still another example of the state image, FIG. 8A shows an example of displaying the vehicle image, the line images, and the arrow image when in the coasting state. FIG. 8B shows an example of displaying the vehicle image, the line images, and the arrow image when in the accelerating state.

The vehicle image 34 is displayed between the line images 42, and the arrow image 46 is displayed in front of or behind the vehicle image 34. When the arrow image 46 is displayed behind the vehicle image 34 as shown in FIG. 8A, it means coasting. When the arrow image 46 is displayed in front of the vehicle image 34 as shown in FIG. 8B, it means acceleration. As in the above embodiment, the relative position of the vehicle image 34 between the line images 42 is changed. Alternatively, the relative position of the arrow image 46 between the line images 42 is changed according to the state. It is therefore possible to recognize whether the state of the driver assistance is the accelerating state or the coasting state and to roughly recognize when each state is going to end. Although the examples are described in which a rough indication of when each state is going to end is displayed by the relative position of the vehicle image 34 between the line images 42 or the relative position of the arrow image 46 between the line images 42, a rough indication of when each state is going to end may be displayed by other methods. For example, a rough indication of when each state is going to end may be displayed by changing the display mode of the arrow image. Specifically, the display mode of the arrow image 46 such as a color or a blinking period may be changed in several ways, and a rough indication of when each state is going to end may be displayed by the change in display mode such as the color or the blinking period.

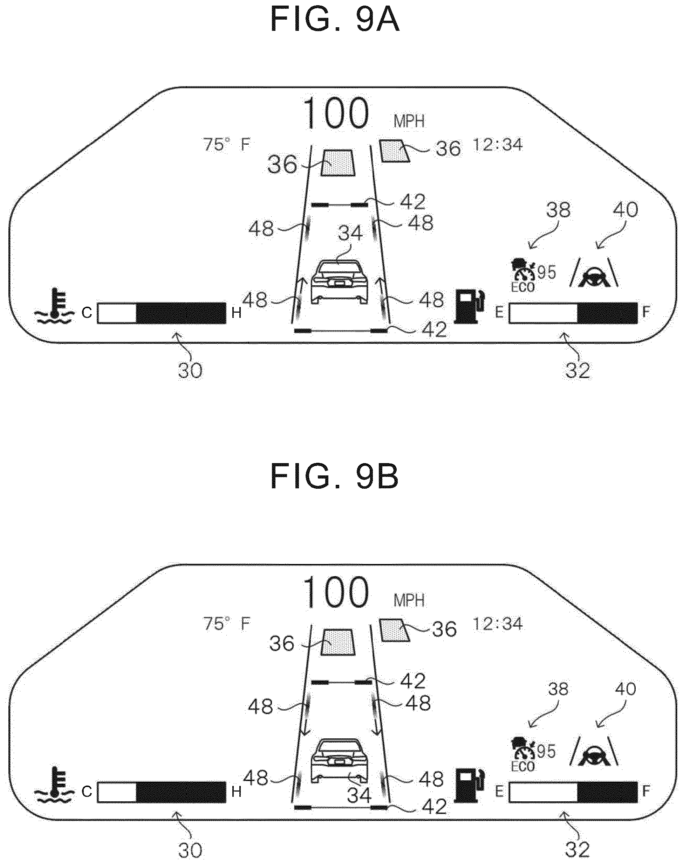

Alternatively, as shown in FIGS. 9A and 9B, the vehicle image 34, the line images 42, and animation images 48 located lateral to the vehicle image 34 may be displayed as a state image. As yet another example of the state image, FIG. 9A shows an example of displaying the vehicle image, the line images, and the animation images when in the coasting state. FIG. 9B shows an example of displaying the vehicle image, the line images, and the animation images when in the accelerating state. FIGS. 9A and 9B show an example in which the animation images 48 are displayed on both sides of the vehicle image 34. However, the animation image 48 may be displayed on one side of the vehicle image 34.

For example, as shown in FIG. 9A, when in the coasting state, the animation images 48 are displayed so as to move in the direction forward of the vehicle image 34. As shown in FIG. 9B, when in the accelerating state, the animation images 48 are displayed so as to move in the direction rearward of the vehicle image 34. As in the above embodiment, a rough indication of when each state is going to end is displayed by changing the relative position of the vehicle image 34 between the line images 42. It is therefore possible to recognize whether the state of the driver assistance is the accelerating state or the coasting state and to roughly recognize when each state is going to end. Although the example is described in which a rough indication of when each state is going to end is displayed by the relative position of the vehicle image 34 between the line images 42, a rough indication of when each state is going to end may be displayed by other methods. For example, a rough indication of when each state is going to end may be displayed by changing the display mode of the animation images. Specifically, the display mode of the animation images 48 such as a color or a blinking period may be changed in several ways, and a rough indication of when each state is going to end may be displayed by the change in display mode such as the color or the blinking period.

Although the state image in the above embodiment and the state images shown in FIGS. 5A, 5B, and 7A to 9B are described as separate aspects, the present invention is not limited to this. For example, at least two of the state image in the above embodiment and the state images shown in FIGS. 5A, 5B, and 7A to 9B may be combined and displayed as appropriate.

The process that is performed by the meter ECU 16 of the vehicle display device 12 in each of the above embodiments is described as a software process that is performed by executing the programs. However, the present invention is not limited to this. For example, the process may be performed by hardware such as a graphics processing unit (GPU), an application specific integrated circuit (ASIC), and a field-programmable gate array (FPGA). Alternatively, the process may be performed by a combination of both software and hardware. In the case of the software process, the programs may be stored in various storage media and distributed.

It should be understood that the present invention is not limited to the above and the present invention can be modified in various forms without departing from the spirit and scope of the present invention.

## Claims

1. A vehicle display device (12) comprising one or more processors (16A), the one or more processors configured to
acquire a state of driver assistance provided by pulse and glide that repeats acceleration and coasting, and
cause a display (14) to display a state image based on the acquired state of the driver assistance, the state image representing an accelerating state or a coasting state of the driver assistance and a rough indication of when each state is going to end.

2. The vehicle display device (12) according to claim 1, wherein the one or more processors (16A) are configured to cause the display (14) to display a vehicle image representing a vehicle and line images in front of and behind the vehicle image, and to cause the display (14) to display the rough indication by changing a relative position of the vehicle image between the line images.

3. The vehicle display device (12) according to claim 2, wherein the one or more processors (16A) are configured to cause the display (14) to highlight the line image in front of the vehicle image when in the accelerating state, and to cause the display (14) to highlight the line image behind the vehicle image when in the coasting state.

4. The vehicle display device (1) according to claim 1, wherein the one or more processors (16A) are configured to cause the display (14) to display a gauge image as the state image, the gauge image representing the accelerating state or the coasting state.

5. The vehicle display device (12) according to claim 1, wherein the one or more processors (16A) are configured to cause the display (14) to display an arrow image according to the accelerating state or the coasting state as the state image.

6. The vehicle display device (12) according to claim 1, wherein the one or more processors (16A) are configured to cause the display (14) to display a vehicle image representing a vehicle, and to display an animation image as the state image on the display (14), the animation image being an image that moves along a side of the vehicle image according to the accelerating state or the coasting state.

7. A vehicle display control method comprising:
acquiring a state of driver assistance provided by pulse and glide that repeats acceleration and coasting; and
displaying a state image based on the acquired state of the driver assistance, the state image representing an accelerating state or a coasting state of the driver assistance and a rough indication of when each state is going to end.

8. A non-transitory storage medium storing instructions that are executable by one or more processors and that cause the one or more processors to perform functions comprising:
acquiring a state of driver assistance provided by pulse and glide that repeats acceleration and coasting; and
displaying a state image based on the acquired state of the driver assistance, the state image representing an accelerating state or a coasting state of the driver assistance and a rough indication of when each state is going to end.
